# EUROPEAN PATENT APPLICATION

(11) **EP 1 304 630 A2**
(43) Date of publication of application: **23.04.2003**
(21) Application number: 02257127.7
(22) Date of filing: 15.10.2002
(51) Int. Cl.: G06F 17/30

(54) **Report generating system**

(30) Priority: 16.10.2001 GB 0124844
(71) Applicant: Blue Edge Software Limited, Leeds LS1 4HY (GB)
(72) Inventor: Dearden, Nicholas, c/o Blue Edge Software Limited, Leeds LS1 4HY (GB)
(74) Representative: Jehan, Robert

(57) **Abstract**

A method of and system for generating reports from a database generate a master report from the database and from that master report generate one or more sub-reports including a proportion of the master report based on predefined criteria. The preferred embodiment provides a method and system for producing personalised electronic reports for access over a computer network. After generating an electronic report in an open document format (for example, HTML, RTF, PDF), commonly produced by a desktop reporting or 'business intelligence' application, the system analyses the logical layout of that report data and then, by comparison with a database of recipient users and their attributes, the system outputs a subset of the original report personalised to the profile of each recipient. This subsetting or 'bursting' is carried out without recourse to regeneration of the whole report or any part thereof from its source data. Furthermore, as the structure and content of the output sets is understood, the system provides a facility to insert hyperlinks automatically so as to associate the sub-components of each subset together in order to allow the recipient to navigate more easily between related data items.

## Description

The present invention relates to a report generating system, able to generate reports from data held in a database.

Most organisations have a need to extract data and to produce reports from ever-increasing amounts of data captured and held in their transaction-processing operational systems. One of the most popular ways to do this is to use end-user query and reporting tools (EUQR) such as those from Brio, Business Objects, Cognos, or Microstrategy. The perceived advantages of these tools are that they abstract the technical complexity of the underlying database schema to allow non-technical end users to create reports without enlisting the involvement of scarce IT resource.

One common drawback of end-user analysis is the machine load it places on the back-end systems. Data warehouses were built with the idea of alleviating this and to provide a consolidated uniform view of a company's data at a given point in time. However, the typical queries generated by a business analyst exploring data are still hardware-intensive and in most organisations this facility has to be restricted to a small number of people.

There is a growing realisation that many of the reports produced by such people, sometimes called power users or knowledge workers, would be of great value to a much wider audience of information consumers within the organisation, such as line managers who would all benefit from "human resources" oriented reports, sales advisors who would benefit from marketing campaign and sales data, and branch managers who would benefit from sales and returns information and so on.

Due to the resource intensive nature of business intelligence queries it is not practical to allow these information consumers to refresh their reports on demand against the database as this would put an unacceptable loading on the system and result in significant and serious degradation of system response times. However, as the vast majority of information consumers have a predictable information requirement (for example, a branch manager wants to see the same information on a daily basis about his sales and returns), it is possible to pre-prepare their information for them at a suitable time (for example overnight). This batch reporting approach also has restrictions, when a report has to be refreshed individually against the database for each intended recipient to ensure that each user receives a personalised view of information. Consider a retailer with 500 outlets, where each branch manager requires a view of the report that only displays information about his/her store sales. If it takes 30 seconds to refresh the report against the database for one outlet, then it will take over 4 hours to produce the output for every store. If there are 6 reports that need to be supplied to each branch on a daily basis, then there are not enough hours in the day to publish the required information.

The present invention seeks to provide an improved report generating system.

According to an aspect of the present invention, there is provided a method of generating reports from a database including the step of generating a master report from the database and generating from the master report one or more sub-reports including a proportion of the master report based on predefined criteria.

The master report is preferably stored in computer memory. This enables generation of sub-reports without the need to query the database again and therefore can save considerable processing time.

Advantageously, the master report is provided with a plurality data units each having associated therewith a marker, the sub-report or reports being generated by obtaining data units having markers matching or associated with said predefined criteria.

In the preferred embodiment, an index of markers is created, said index being scanned for matches with said predetermined criteria.

The predefined criteria are preferably stored in memory and accessed to generate automatically sub-reports.

The report is preferably stored as a standard format, such as Hypertext Markup Language (HTML), Rich Text Format (RTF), Portable Document Format (PDF).

According to another aspect of the present invention, there is provided a system for generating reports from a database including means for generating a master report from the database, and means for generating from the master report one or more sub-reports including a proportion of the master report based on predefined criteria.

The preferred embodiment provides a method and system for producing personalised electronic reports for access over a computer network. After generating an electronic report in an open document format (for example, Hypertext Markup Language (HTML), Rich Text Format (RTF), Portable Document Format (PDF) and so on), commonly produced by a desktop reporting or 'business intelligence' application, the system analyses the logical layout of that report data and then, by comparison with a database of recipient users and their attributes, the system outputs a subset of the original report personalised to the profile of each recipient. This subsetting or 'bursting' is carried out without recourse to regeneration of the whole report or any part thereof from its source data. Furthermore, as the structure and content of the output sets is understood, the system provides a facility to insert hyperlinks automatically so as to associate the sub-components of each subset together in order to allow the recipient to navigate more easily between related data items.

An embodiment of the present invention is described below, by way of example only, with reference to the accompanying drawings, in which:
Figure 1 shows examples of source reports;
Figure 2 shows examples of output report fragments of the example source reports of Figure 1;
Figure 3 shows an example of output for fictitious users John and Jane;;
Figure 4 is a flow chart illustrating the preferred embodiment of report bursting process; and

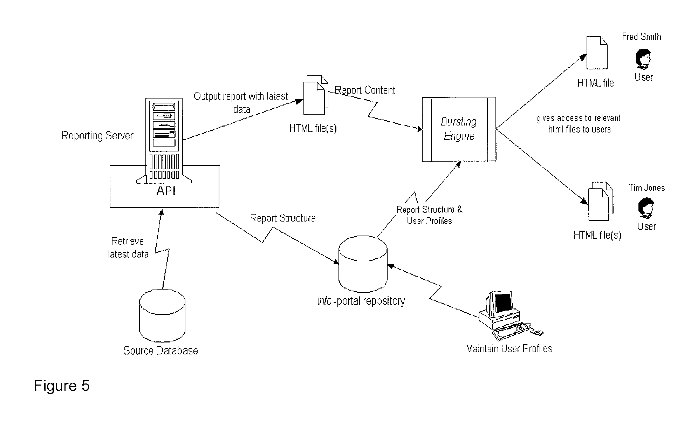

Figure 5 is an overview of the preferred embodiment of system.

The preferred system runs the report just once against the database and then intelligently 'bursts' the resultant output, so that each user receives a subset of the report based on his/her profile as defined in a central repository database. This profile would specify that a particular user only sees specific information, for example for branch number 1234. By running the report just once against the database, the loading on the database server is dramatically reduced, with a corresponding increase in scalability to allow very large user communities to be supported.

Once the business intelligence report has been refreshed just once against the database, the large piece of resultant output may be analogous to an encyclopaedia, wherein each entry is uniquely identified by name and may contain several paragraphs and/or pictures (such as tables of data and graphs). The 'bursting' of the report to different recipients is accomplished by programmatically comparing the index of encyclopaedia entries to a list of each recipient's interests and then copying out the matching paragraphs to form a new document for each user, containing only those entries which match their registered interests. In the example of a business intelligence report, the recipients interests could relate to their security profile (e.g. branch=1234, department=sales, cost centre=4389 and so on).

The report writing modules within the EUQR tools offer the facility to break the report into smaller sub-sections to allow sub-totals and other calculations to be added and also to make it easier for the user to read the presented information. For example, a human resources report may be sub-sectioned by department so that there is one element for every department within the organisation, and within each sub-section a table can be presented showing holiday entitlement for every employee who works in that department.

When a document is created the user needs to define which of the available profiles should be applied to personalise the information for the intended recipients (for example, Department). If the user creates one sub-section within the document for each of these profiles, it is possible subsequently to divide the report output into smaller pieces to ensure that each user only sees those elements of the original report to which their profile entitles them.

EUQR tools, as is the norm for modern desktop applications, have the capability to save generated documents to persistent disk storage in a number of different machine-readable formats typically including: a proprietary binary format, Rich Text Format (.rtf), plain text (.txt), Portable Document Format (.pdf), and Hypertext Markup Language (.htm). Aside from the proprietary format these are all widely used standard formats, which can be read and understood by a number of different application programs (for example, Microsoft Word, Internet Explorer). In each case the conversion to a different format results in a file that, on being read and displayed by another program, can be regarded as a visual likeness of the original report produced in the EUQR tool, differing only in the fidelity of its reproduction, according to the constraints and capabilities of each individual format. These non-proprietary output formats can all be considered suitable inputs to the 'bursting' process.

Once the output is available in a non-proprietary format, the first step, as with the encyclopaedia example, is to produce an 'index' to represent the logical structure of the document. The next stage is to retrieve from the central repository database, the list of intended recipients for this particular document and their individual profiles.

The final stage is to scan the index for every recipient's profile to determine which elements of the report they are authorised to access and then to both record this information within the central repository database and save this indexed output set to disk storage. This ensure that each user accesses his/her individual view of information on request to view the report.

The system can thus provide a repository (memory) that contains data about recipients/users, entered and maintained through an administrative program interface or automatically by interfacing to the open application programming interface (API), for bursting reports to those users based on that control data held in the repository. Such 'bursting' provides a method of running the database query once only and then intelligently segmenting the resultant output to match user requirements held in the central repository database, thus drastically reducing the time to create individualised reports for a mass audience. Users can be internal or external to an organisation and can be identified by name or alternatively by role. Users can be organised into groups, and profiles can be associated to groups and/or individual users. Each combination of a user and a profile can have a profile value set for it, such as for user Fred: Region=North.

The reporting tool is programmatically controlled via its own published API or similar interface to write out an HTML (or other non proprietary format) representation of the report. This may constitute one or several physical HTML files depending on the tool and the structure of the report. The structure of the report is derived by reference to the API of the tool and/or by parsing of the HTML output, and stored in the database repository. Of key significance is to locate in this structure the location of the data elements on which the recipients are profiled, is the example given the whereabouts on the report of the Region name(s). In one embodiment, this structure detail is held in XML format (eXtensible Markup Language), a format particularly suited to processing hierarchical data, so as to expedite the traversal of any data hierarchies and the selection of report elements matching certain criteria.

XML is a method for putting structured data in a text file. In this description, For "structured data" is intended to relate to such things as spreadsheets, address books, configuration parameters, financial transactions, technical drawings, etc. Programs that produce such data often also store it on disk, for which they can use either a binary format or a text format. The latter allows, if necessary, looking at the data without the program that produced it. XML is a set of rules, guidelines, conventions, whatever you want to call them, for designing text formats for such data, in a way that produces files that are easy to generate and read (by a computer), that are unambiguous, and that avoid common pitfalls, such as lack of extensibility, lack of support for internationalisation/localisation, and platform-dependency.

The whole process is the programmatic equivalent of printing a whole slew of fanfold paper, splitting out the individual pages, and then by reference to a list of recipients interests, for example names of all regional managers, copying each individual page sufficient times to enable a bundle of pages to be stapled together and put in an internal post system envelope for despatch to the recipients.

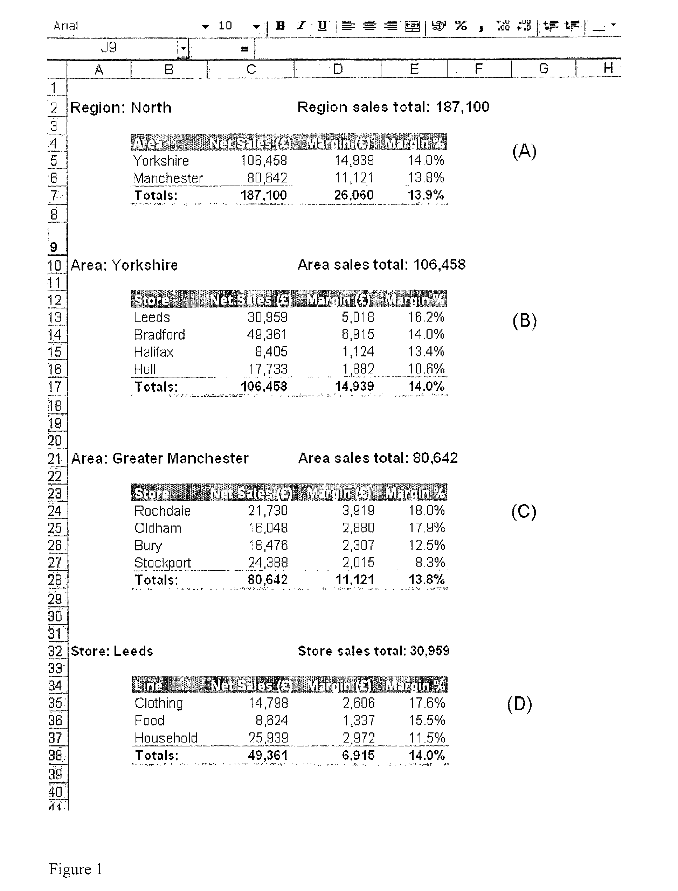

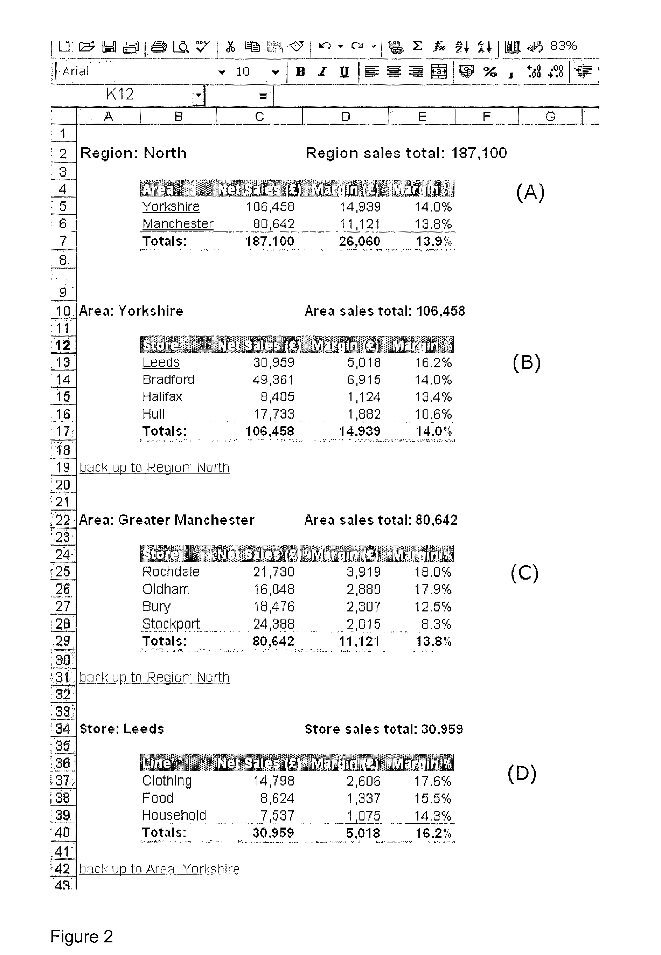

It is common for a report document to contain several different views of (subsets of) the same data, for example, sales details may be presented at each of Region, Area, and Store levels (see Figure 1). By identifying common elements in each of these views it is possible to achieve two further effects:
A) first, it is possible to determine the hierarchical structure (if any) of the data in the report. For example, given the report in Figure 1, it is possible programmatically to ascertain from the report that stores in Leeds and Bradford are in the Yorkshire Area (B), which is in turn a component part of the North Region (A). This has two benefits:
   1) users only need profiles to be set for them at the highest level of information they are authorised to access, so in the case of the manager of North Region (A), he/she only needs a profile setting at Region level and the tool will automatically deduce that they could also see Areas Yorkshire (B) and Manchester (C) and the stores in those areas (D);
   2) it is also possible optionally to present information to users that is higher up the same leg of the hierarchy in which they reside. Thus, rather than just bursting the data for Yorkshire Area (B) to the recipients with a profile of Area=Yorkshire, the system can optionally also provide them with a view of the data for North Region (A) but not the data for any other Regions or Areas, for example they do not receive data for Manchester Area (C) and its component stores;
B) secondly, the system can allow users to navigate quickly around the report by altering the HTML of the report output to insert hyperlinks around the common elements which, when invoked, cause the users currently viewed report fragment to be replaced with another which contains data about the entity on which they clicked. For example, a report containing data for the North Region (A) may contain a table listing all the Areas contained in that region, and by clicking on the name of an Area (that has been programmatically converted into a hyperlink) the user can be navigated to a separate report fragment containing more detailed data for that selected store. In Figure 2 such hyperlinks have been inserted into the example report used in Figure 1. In this case, clicking on the word 'Manchester' in (A) would cause the user's view to change to display the report fragment (C). A facility is also provided via a hyperlink (in this example the text 'back up to...') to allow the user to navigate back up to the higher-level information, so that the user viewing information at the area level would be able to link back up to the region level.

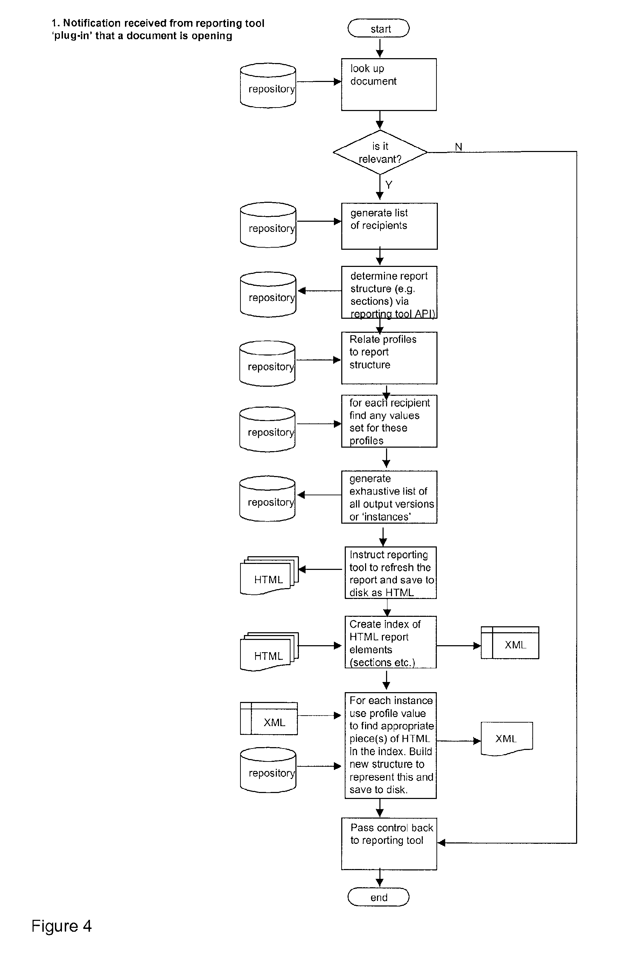

Figure 4 shows an example of technical flow outline, which summarises the following steps.

### 1. Store user details in repository database

It is first necessary to have stored in a central repository database details for users, profiles, and reports in repository database. Examples of the required data could be:
'John' is a User
'Susan' is a User
'Tom' is a User
'Jane' is a User
'Area' is a Profile
For the Profile 'Area', John has the value 'Yorkshire'
For the Profile 'Area', Susan has the value 'Manchester'
For the Profile 'Area', Jane has the value 'Yorkshire'
Notice that 'Tom' has no profile values set.
'Weekly Sales' is a Report
The 'Weekly Sales' Report is to be distributed to Users John, Susan, Tom and Jane.

This data entry can be accomplished using web-based program or bulk-load API.

### 2. Interface to repott-writing tool

A user can attach some program or 'plug-in' to the reporting tool program, using its API, and configure it so as to receive notification whenever a report is opened. The exact mechanism for this will obviously vary by each reporting tool but, due to conventions and trends in the design of such desktop applications (often called 'personal productivity software'), will always be similar. This usually takes the form of a piece of Visual Basic for Applications (VBA) code. (VBA is a programming environment produced by Microsoft^{(TM)} and licensed to third-party software vendors to embed within their desktop applications in order to provide a common programming and event model between such tools.)

### 3. Check each report for relevance

Once a report-open notification is received the repository database must be queried to see if this particular report is one to be burst out to the pre-defined users. For example, report 'Weekly Sales' has just been opened: does a record exist for it in the repository database?

If not then control is returned to the reporting tool and no further action is taken.

### 4. Create list of recipients

If the report is described in the repository then, by reference to other data in the repository, the system can generate a list of the intended recipients.

For example, report 'Weekly Sales' has been opened and is a report to burst, so the system scans the repository to reveal that John, Susan, Tom and Jane are all intended recipients.

### 5. Extract report structure

Using the reporting tool API (usually VBA-based) the system gathers report structure and hierarchy information and stores it in the repository database. The division of the report into separate blocks or sections is of particular interest, as this will be used later as an indication of the profiles to be applied.

For example, the 'Weekly Sales' report (Figure 1) has separate blocks or subsections for the North region (A), the Yorkshire and Manchester areas (B) and (C), the Leeds store (D) etc. We can also see that in the regional section (A), one of the data columns is entitled 'Area'. Likewise, in (B) and (C) we can see data columns for 'Store'. Additionally, by examining the values in the 'Area' and 'Store' columns we can build up a map of the hierarchy contained in the report, that is we can deduce that the Leeds store is in the Yorkshire area and the North region but is not part of the Manchester area. All this information will be stored away in the repository database.

### 6. Relate profiles to report structure

For each such block or subsection found, the system determines whether the summary level is analogous to one of the profiles defined in the repository database. For example, the sections of the 'Weekly Sales' report are summarised at Region (A), Area (B and C) and Store (D) levels. Therefore the system searches the profile information held in the repository to see if 'Region', 'Area', or 'Store' are defined as profiles. In this example there is a match for 'Area' so the system knows that these sections of the report can be burst out according to user profiles.

### 7. Cross-reference profiles to users

For each profile found, the system checks whether any of the recipients have a value set. For example, the profile for 'Area' must be applied to this report, which is intended for John, Susan, Tom and Jane, but only the first three of them have values set for this profile ('Yorkshire', 'Manchester', and 'Yorkshire' respectively).

### 8. Generate list of required outputs

From the list of recipient profile values, the system generates an exhaustive list of all required output versions or 'instances'. For example, in the illustrated report it is requires to produce three different sets of output:
a version for Area = Yorkshire, which will be for John and Jane
a version for Area = Manchester, which will be for Susan
an unrestricted version, which will be for Tom

### 9. Save report as HTML

The following steps are performed here:
a) instruct the reporting tool (again via its API) to save the report to disk file(s) in HTML format
b) record the location of the saved file(s) in the repository database;
c) depending on both the tool in question and the structure of the report itself one or more HTML files are generated.

For example, the 'Weekly Sales' report may be saved as four different HTML files, one for each of the sections (A,B,C,D). Some reporting tools will also save a fifth HTML file that is a kind of index to the other four.

### 10. Build index of HTML structure

The system parses the HTML file(s) in order to understand which pieces of HTML correspond to which sections of data (by reference to the report structure information previously derived from the reporting tool API) and build in-memory XML structures to represent this. For example, it is possible to discern which of the four HTML files corresponds to which section (A,B,C,D) and whereabouts in each of those files the different data items are, that is the location of each data column and summary line within the HTML file. So in Section (A), it is possible to derive that the first column in the table was 'Area'.

### 11. Create output instances

The system loops through the list of required output instances and, for each one, uses the associated profile value information to look-up the required elements of HTML in the XML index structures. A new XML structure is built that describes which pieces of HTML content make up this unique output instance and this information is saved to disk. This XML file also contains some metadata (data which describes other data) to describe its contents.

For example, the output instance to be produced for John and Jane (Area = Yorkshire) will consist of HTML fragments representing report sections (B) and (D) (remember we know from the hierarchy data garnered in step 5 that the Leeds store is part of the Yorkshire Area). Therefore the system can create an XML file pointing to the HTML for (B) and (D), containing some metadata which describes the content as being for the Yorkshire Area and the Leeds store, and write it to disk with a unique name. The name and location of this XML file is saved in the repository database to enable later retrieval of this information on user request.

### 12. Insert navigational hyperlinks

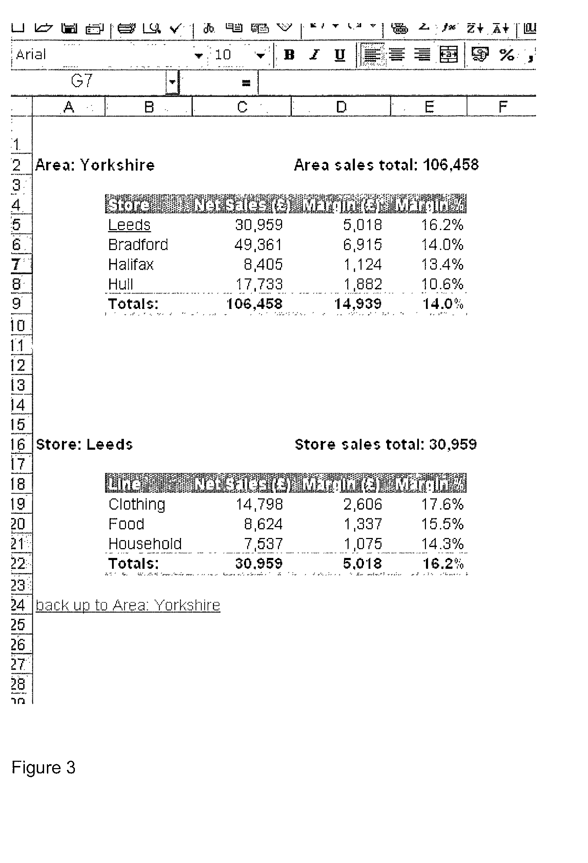

As each instance XML file is being produced it is also possible to alter the referenced HTML files to add the hyperlinks between related data items. In this case it is necessary to save the altered HTML under a different name so as to avoid impacting the next iteration of this loop. For example, the output instance for John and Jane consists of two logically related HTML fragments. The system will cause the text 'Leeds' in the Store column of fragment (B) to become a hyperlink which points to fragment (D). Therefore, when John is viewing fragment (B) in his web browser he can see that 'Leeds' is a hyperlink (it is underlined and the mouse pointer will change shape when passed over it, as is the norm for a hyperlink within an HTML document viewed in a web browser) - this is shown in Figure 3.

Similarly, the output instance for Tom (who has no profiles to be applied) will consist of four hyperlinked HTML files (see Figure 2). Section (A) will contain links to both sections (B) and (C), and section (B) will contain a link to section (D).

### 13. End of Process

Once all output instances have been produced in this way and their locations recorded in the repository database the report bursting process is at an end.

## Claims

1. A method of generating reports from a database including the step of generating a master report from the database and generating from the master report one or more sub-reports including a proportion of the master report based on predefined criteria.

2. A method according to claim 1, wherein the master report is stored in computer memory.

3. A method according to claim 1 or 2, wherein the master report is provided with a plurality data units each having associated therewith a marker, the sub-report or reports being generated by obtaining data units having markers matching or associated with said predefined criteria.

4. A method according to claim 3, wherein an index of markers is created, said index being scanned for matches with said predetermined criteria.

5. A method according to any preceding claim, wherein the predefined criteria are stored in memory and accessed to generate automatically sub-reports.

6. A method according to any preceding claim, wherein the report is stored as a standard format.

7. A method according to claim 6, wherein the report is stored as Hypertext Markup Language (HTML), Rich Text Format (RTF) or Portable Document Format (PDF).

8. A system for generating reports from a database including means for generating a master report from the database, and means for generating from the master report one or more sub-reports including a proportion of the master report based on predefined criteria.

9. A system according to claim 8, including a computer memory in which the master report is stored.

10. A system according to claim 8 or 9, wherein the master report is provided with a plurality data units each having associated therewith a marker, the sub-report or reports being generated by obtaining data units having markers matching or associated with said predefined criteria.

11. A system according to claim 10, wherein an index of markers is created, said index being scanned for matches with said predetermined criteria.

12. A system according to any one of claims 8 to 11, wherein the predefined criteria are stored in memory and accessed to generate automatically sub-reports.
